# EUROPEAN PATENT APPLICATION

(11) **EP 4 292 791 A1**
(43) Date of publication of application: **20.12.2023**
(21) Application number: 23179309.2
(22) Date of filing: 14.06.2023
(51) Int. Cl.: B29C 39/02, B29C 39/26, B29C 33/30, C08J 5/18, C08L 75/04

(54) **ENVIRONMENTALLY FRIENDLY POLYURETHANE MOULDED MATRIX AS WELL AS METHOD OF THE REALIZATION THEREOF**

(30) Priority: 14.06.2022 IT 202200012587; 14.06.2022 IT 202200012590
(71) Applicant: Asnicar, Alessandro, 36076 Recoaro Terme (VI) (IT)
(72) Inventor: Asnicar, Alessandro, 36076 Recoaro Terme (VI) (IT)
(74) Representative: Autuori & Partners

(57) **Abstract**

The use of a polyurethane polymer for manufacturing at least one layer of a shaped polyurethane matrix (1) which can be fixed to a building panel to obtain a wall or a part thereof with at least one decorative element in relief. The polyurethane polymer consists of 40% by weight to 85% by weight of polyol, from 15% by weight to 6% by weight of isocyanate, from 3% by weight to 40% by weight of an elastomeric and / or thermoplastic polymer. The polyurethane polymer has a Shore A hardness measured according to the ASTM D 2240 standard comprised between 45 Sh A and 75 Sh A, while the elastomeric and / or thermoplastic polymer is a post-consumer material according to the UNI EN ISO 14040 and UNI EN ISO 14044 standards.

## Description

### Field of the invention

The present invention relates to the technical field of shaped polyurethane matrices and in particular it relates to the use of a polyurethane polymer for manufacturing at least one layer of a low environmental impact shaped polyurethane matrix which can be fixed to a building panel, for example of prefabrication formworks or benches, to obtain a wall or a part thereof with decorative elements in relief.

The invention also relates to a low environmental impact shaped polyurethane matrix with at least one layer made with such polyurethane polymer, as well as a method for manufacturing such matrix.

### Definitions

In the present document, the expression "post-consumer material" and the derivatives thereof is used to indicate a recycled material, that is reprocessed from recovered material, according to the UNI EN ISO 14040 and UNI EN ISO 14044 standards and possible updates of such standards subsequent to the date of filing of the present document.

In the present document, the expression *"*% by weight*"* relating to one or more components in a composition of interest is used to indicate the percentage of the dry weight of such one or more components with respect to the total dry weight of the composition.

In the present document, the term "matrix" and the derivatives thereof is used to indicate a polymeric material suitable to provide the molecular structure of the finished product.

In the present document, the expression "polymeric material" or the derivatives thereof is used to indicate both a single polymer and a mixture of polymers.

In the present document, the expression "additive" and the derivatives thereof is used to indicate a substance which, when added to a composition, improves one or more characteristics thereof.

In the present document, the expression "semi-liquid" and the derivatives thereof referring to a mixture, is used to indicate the fact that the latter is in liquid state, but it is characterised by a significant density and consistency.

In the present document, the expression "providing" or its derivatives is used to indicate the preparation of an element of interest to a process step of interest, therefore including any preventive treatment aimed at the optimal execution of the step of interest, from simple collection and possible storage to heat and/or chemical and/or physical pretreatments and the like.

In the present document, the expression "polymerisation" referring to a polymer, is used to indicate a process through which there is carried out the cross-linking of the polymer matrix which flows into the composition of a determined composite material.

### State of the Art

There is known the use of matrices starting from a mixture in semiliquid form consisting of a polyol, isocyanate and possible additives in determined proportions, poured in a special mould which has the positive cast of the decorative element and solidified - through polymerisation - so as to obtain the matrix made of a polyurethane polymer with the negative cast of the latter.

The obtained matrix is therefore fixed to a panel, for example wood, which typically forms one of the walls of the formwork into which the concrete or any other material is poured to obtain a wall or a part thereof which has decorative elements in relief corresponding to the aforementioned positive cast.

However, at each use the matrices tend to be consumed with the ensuing limited duration and subsequent use of large amounts of virgin raw materials derived from petroleum or similar materials.

The result is an overall considerable environmental and economic impact linked both to the production chain of the matrices and to the disposal thereof.

### Summary of the invention

The object of the present invention is to overcome the drawbacks outlined above by providing a shaped matrix that is highly effective and relatively cost-effective.

A further object of the present invention is to provide a low environmental impact shaped matrix.

A further object of the present invention is to provide a low environmental impact shaped matrix with mechanical and quality properties comparable to a matrix according to the state of the art.

A further object of the present invention is to provide a shaped matrix with relatively low manufacturing and/or disposal costs.

These and other objects which will be more apparent hereinafter, are attained using a polyurethane polymer for providing at least one layer of a shaped polyurethane matrix according to claim 1.

In a further aspect of the invention, shaped polyurethane matrix and a method for manufacturing the same may be provided for respectively according to claims 8 and 9.

The dependent claims relate to advantageous embodiments of the invention.

On the other hand, irrespective of the above, there may be provided for a large shaped polyurethane matrix as well as a method for manufacturing the same and/or a mould according to claims 10 to 15.

With regard to such solution, it is known that the type of polyurethane polymers used to obtain such large matrices, typically self-levelling or semi-levelling, tend to solidify within a very short time, with ensuing formation of uneven levels and/or curvatures on the surface of the shaped matrix designed to be fixed to the panel, therefore complicating such operation.

Such problem is in particular very felt when it comes to large matrices.

The solution according to claims 10 to 15, allows to obtain a large shaped matrix with an even fixing surface, so that it is easy to fix to a building panel.

### Detailed description of some preferred embodiments of the invention

Generally, the shaped polyurethane matrices 1 according to the present invention may be suitable to be fixed to a building panel for example for manufacturing a disposable formwork to be used for a wall or a part thereof with decorative elements in relief.

However, it is clear that such polyurethane matrices 1 may be used for other purposes without departing from the scope of protection of the attached claims.

In a first formulation, the polyurethane polymer used in the present invention may comprise:
(A) from 40% by weight to 85% by weight of polyols;
(B) from 15% by weight to 46% by weight of isocyanate;
(C) from 0% by weight to 5% by weight of at least one additive.

It should be observed that the % by weight are calculated with respect to the total weight of the polyurethane polymer.

In addition, the sum of the components from (A) to (C) and possible further additional components 100%.

In particular, once polymerised, the polyurethane polymer may have a hardness measured according to the ASTM D 2240 standard comprised between 45 Sh A - 75 Sh A, more preferably between 50 - 70 Sh A, even more preferably between 55 - 65 Sh A.

In a second formulation, the polyurethane polymer may consist of:
(A) from 40% by weight to 85% by weight of polyols;
(B) from 15% by weight to 46% by weight of isocyanate;
(C) from 0% by weight to 5% by weight of at least one additive;
(D) from 3% by weight to 40% by weight of an elastomeric and / or thermoplastic polymer.

It is clear that the total sum of the % by weight of the components from (A) to (D) is 100%.

Even in this case, the % by weight of the components from (A) to (D) are calculated with respect to the total weight of the polyurethane polymer.

According to this example, once polymerised, the polyurethane polymer may have a hardness measured according to the ASTM D 2240 standard comprised between 45 Sh A - 75 Sh A, more preferably between 50 - 70 Sh A, even more preferably between 55 - 65 Sh A.

Furthermore, the polyurethane polymer may have a density measured according to the ASTM D297 standard comprised between 150 kg/mc and 1300 kg/mc, more preferably between 300 kg/mc and 1100 kg/mc.

Advantageously, the polyurethane polymer in semiliquid form may have a viscosity measured according to the ASTM D 445 standard comprised between 500 and 6500 cP, more preferably between 700 and 5000 cP, even more preferably between 800 and 2500 cP.

Preferably, once polymerised, the polyurethane polymer may have an elongation at break measured according to the ASTM D 3574 standard and comprised between 70% and 100% more preferably between 80% and 95%.

In addition, the elastomeric and / or thermoplastic polymer may be a post-consumer material according to the UNI EN ISO 14040 and UNI EN ISO 14044 standards and any updates to such subsequent regulations at the date of filing of the present document.

Therefore, using such polyurethane polymer for manufacturing one or more layers of the matrix **1** or the entire matrix **1,** each layer of the latter or the same may comprise a percentage from 3% to 40% by weight of post-consumer material, therefore having low environmental impact.

It is clear that the percentages greater than 40% of elastomeric and / or thermoplastic polymer (D) may significantly increase the viscosity of the mixture making it difficult to process, pour and level, therefore creating a process limit.

Advantageously, among the additives (C) there may be considered fillers, flame-retardant agents, surfactants, catalyst and the like.

Preferably, the elastomeric and / or thermoplastic polymer (D) may be selected from the group comprising: rubber, silicone, polyurethane and the like or a mixture of two or more of them.

According to a preferred but non-exclusive embodiment, the elastomeric and / or thermoplastic polymer (D) may be a rubber recycled starting from tyres, in a per se known manner.

Advantageously, the elastomeric and / or thermoplastic polymer (D) may be in solid state, for example in the form of granules measuring 0.01 - 25 mm in diameter, more preferably 0.1-10 mm, even more preferably 0.8 - 3 mm.

However, it is clear that the elastomeric and / or thermoplastic polymer (D) may also be in liquid or semiliquid form without departing from the scope of protection of the attached claims.

According to an aspect of the invention, the polyurethane polymer described above in the two formulations may be used for manufacturing one or more layers of the aforementioned matrix **1.**

Specifically, the polyurethane polymer described in the second formulation may be used for manufacturing one or more layers of the aforementioned low environmental impact matrix **1.**

In particular, the matrix **1** may have a surface area comprised between 0.5 - 4 m², more preferably between 1 - 3 m². Even more particularly, the matrices **1** with surface area measuring between 4 m² and 500 m² define large matrices in the present document.

It is clear that the value 4 m² is comprised only in the range defining the surface area of large matrices **1.**

Generally, in order to manufacture one or more layers of a matrix **1,** irrespective of whether large or small, there arises the need to provide a mould **2** or **2'** in a per se known manner, for example made of silicone, rubber, wood, metal or any other appropriate material, wherein the mould **2** refers to small matrices **1,** therefore with surface area measuring between 0.5 - 4 m², while the mould **2'** refers to large matrices **1,** therefore with surface area measuring between 4 m² and 500 m².

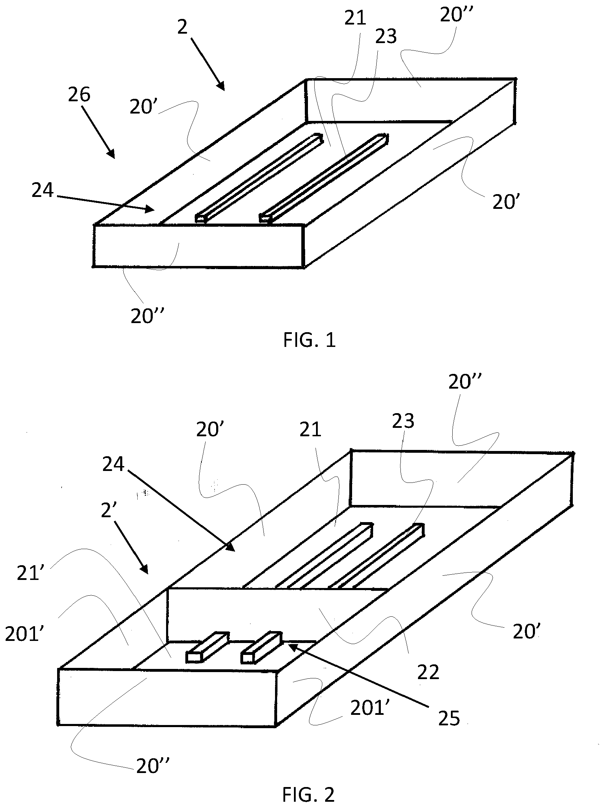

Advantageously, the moulds **2** and **2'** may have a support structure **26,** as shown in **FIGS. 1** and **2****.**

For example, the latter may be box-like with side walls **20** and a bottom wall **21** coupled to each other.

Specifically, the side walls **20** may include a pair of side walls **20'** and a pair of side walls **20"** facing each other two by two.

In this manner, the structure **26** may include a compartment **24.**

Preferably, the bottom wall **21** may include a positive cast **23** of the decorative element to be obtained on the wall of interest or a part thereof.

On the other hand, there will arise the need to prepare a mixture with at least the aforementioned components (A) and (B), and possibly (C), in the case of the first polyurethane polymer formulation, or exclusively with the aforementioned components (A), (B), (D) and possibly (C), in the case of the second polyurethane polymer formulation.

In particular, the mixture may be obtained by mixing components (A), (B) and possibly (C), with possible addition of component (D) in the case of the second formulation.

Advantageously, the mixing may be carried out manually, or automatically using agitators, mixers, foaming machines or the like.

According to a preferred but not exclusive embodiment, with reference to the second aforementioned formulation, the component (D) may be subsequently added to the mixture of components (A), (B) and possibly (C).

However, it is clear that the component (D) may be added simultaneously with the components (A), (B) and possibly (C) for instantly forming a single mixture or the mixture may be obtained by mixing components (A), (D) and possibly (C), with the subsequent addition of component (B) without departing from the scope of protection of the attached claims.

Furthermore, it is clear that the aforementioned components may be weighed manually using special weighing scales or using automated metering devices.

In other words, the entire step for preparing the mixture may be manual, automated or semi-automated.

In case of small matrices 1, the obtained semi-liquid mixture may be subsequently poured into the compartment **24** of the mould **2** where it is polymerised for a predetermined period of time, for example measuring 15 - 4000 seconds, more preferably 40 - 3600 seconds, even more preferably 100 - 3000 seconds, depending on the polymerisation time in particular of components (A) and (B).

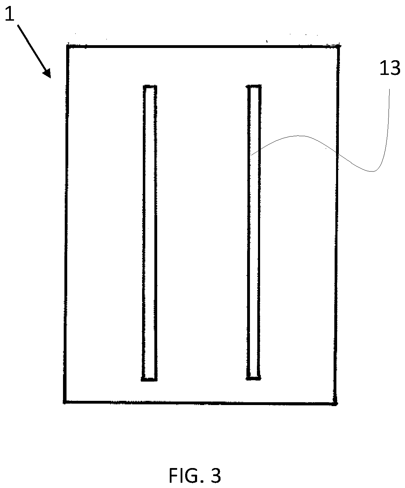

This may allow to obtain a matrix **1 or** a layer thereof which has the negative cast **13** of the corresponding positive cast **23** of the decorative element, at the face in contact with the bottom wall **21,** in a per se known manner and as schematically shown in **FIG. 3** which shows a front view of a matrix **1.**

Furthermore, it is clear that subsequently to the pouring step and prior to the polymerisation step or simultaneously with the pouring step, there may be carried out a step for levelling the poured mixture, in a per se known manner, so as to prevent the formation of possible surface defects or curvatures at the exposed surface during the processing, which will then be adapted to be fixed to a building panel.

In the case of large matrices **1,** providing one or more layers thereof, or the whole of the matrix **1,** will require some solutions.

In particular, as shown in **FIG. 2****,** the mould **2'** may include a partitioning containment wall **22** perpendicular to the bottom wall **21.**

Such mould **2'** may per se represent a further aspect of the invention.

For example, the partitioning wall **22** may be parallel to the walls **20"** and perpendicular to the walls **20'.**

Advantageously, the partitioning wall **22** may be movable, sliding along the wall **21,** from one of the walls **20"** to the other, defining a displacement from a start to end-of-stroke.

In this manner, there may defined several closed portions **25,** equal or not equal to each other, into which part of the mixture will be progressively poured.

It is clear that such portions **25** may be intended as portions of the compartment **24,** delimited by a progressive portion **21'** of the bottom wall **21,** by a progressive portion **201'** of the walls **20'** of by the wall **22.**

However, it is clear that the partitioning wall **22** may be parallel to the walls **20'** and perpendicular to the walls **20"** and it may be movable, sliding along the wall **21,** from one of the walls **20'** to the other to define the start to end-of-stroke displacement, without departing from the scope of protection of the attached claims.

Preferably, the partitioning wall **22** may have counter-shaped openings with respect to the cross-section of the positive cast **23** so as to ensure the sliding of the wall **22** along the wall **21.**

Furthermore, it is clear that the coupling between the bottom wall **21,** the positive cast **23** and the partitioning wall **22** may be of the sealing type so that the semi-liquid mixture does not pour between the adjacent portions **25.**

In this case, once the mixture has been poured into a first portion **25** and after waiting for the polymerisation thereof for the aforementioned period of time, the wall **22** may be moved automatically or manually in a per se known manner.

Therefore, a further part of mixture may be poured into a second portion **25** adjacent to the first and the steps for polymerising and moving the wall **22** are repeated so that it impacts against the wall **20"** at the end-of-stroke.

In this case, it is clear that the levelling operation may be carried out iteratively after or simultaneously with each pouring and before polymerising the part of mixture poured into the portion **25.**

This may allow to obtain the layer or large matrix **1** with the negative cast **13** of the decorative element, as shown in **FIG. 3****.**

The present invention may include various parts and/or similar or identical elements. Unless otherwise specified, similar or identical parts and/or elements will be indicated using a single reference number, it being clear that the described technical characteristics are common to all similar or identical parts and/or elements.

The invention will be described in greater detail with reference to the following examples which, in any case, shall not be deemed to limit the scope of protection of the invention.

### Examples

### Example 1 - preparation of samples

Some samples of polyurethane elastomers were prepared.

### 1.1 The raw materials below were used to prepare the samples of polyurethane polymers without post-consumer elastomeric and / or thermoplastic polymer (D):

(A) polyol: Poltech 74110 produced by Technochem;
(B) isocyanate: Isotech TCC 142 produced by Technochem.

The formulations are reported in Table 1 below. All samples were free of additives (C), and they were obtained by mixing the aforementioned components in a special automatic mixer.

**TABLE 1**

| | **POLYURETHANE POLYMER 1A** | | **POLYURETHANE POLYMER 2A** | | **POLYURETHANE POLYMER 3A** | |
|---|---|---|---|---|---|---|
| **TYPE** | **COMPONENT** | **% BY WEIGH T** | **COMPONENT** | **% BY WEIGHT** | **COMPONENT** | **% BY WEIGHT** |
| A | Polyol | 73 | Polyol | 67 | Polyol | 63 |
| B | Isocyanate | 27 | Isocyanate | 33 | Isocyanate | 37 |

### 1.2 The raw materials below were used to prepare the samples of polyurethane polymers with post-consumer elastomeric and / or thermoplastic polymer (D):

(A) polyol: Poltech 74110 supplied by Technochem;
(B) isocyanate: Isotech TCC 142 supplied by Technochem;
(D) elastomeric polymer: Styrene-butadiene rubber supplied by Metem.

The formulations are reported in Table 2 below. All these samples were free of additives (C), and they were obtained by mixing components (A) and (B) in a special automatic mixer with a subsequent addition of component (D) into the mixer.

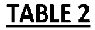

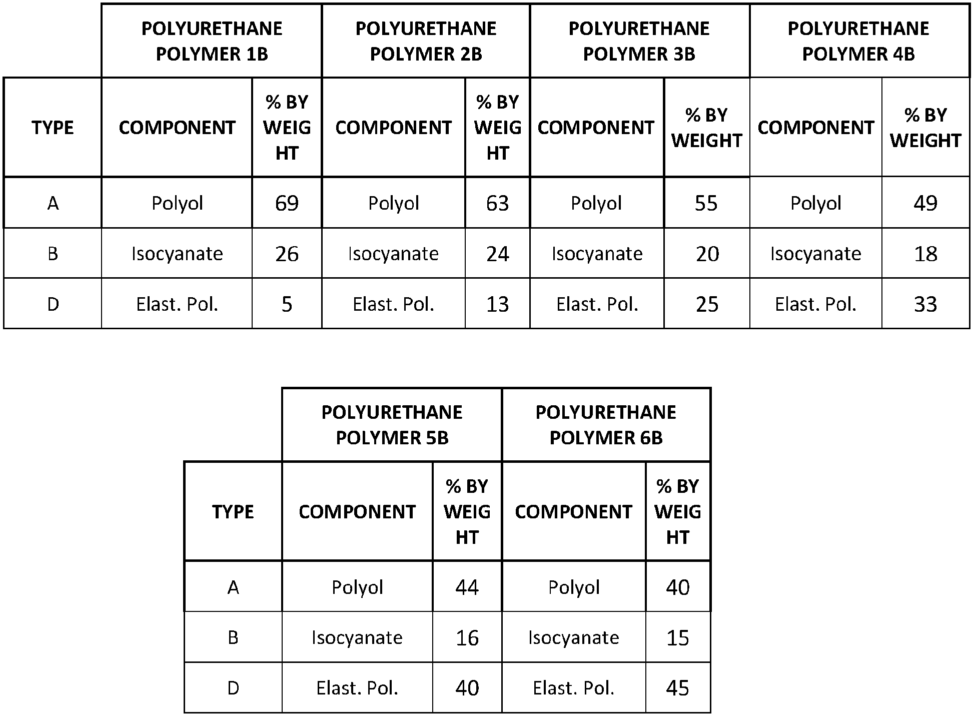

### 1.3 The raw materials below were used to prepare the samples of an intermediate mixture containing polyol (A) alone and post-consumer elastomeric and / or thermoplastic polymer (D):

(A) polyol: Poltech 74110 supplied by Technochem;
(D) elastomeric polymer: Styrene-butadiene rubber supplied by Metem.

The formulations are reported in Table 3 below. All samples were free of additives (C), and they were obtained by mixing components (A) and (B) in a special automatic mixer.

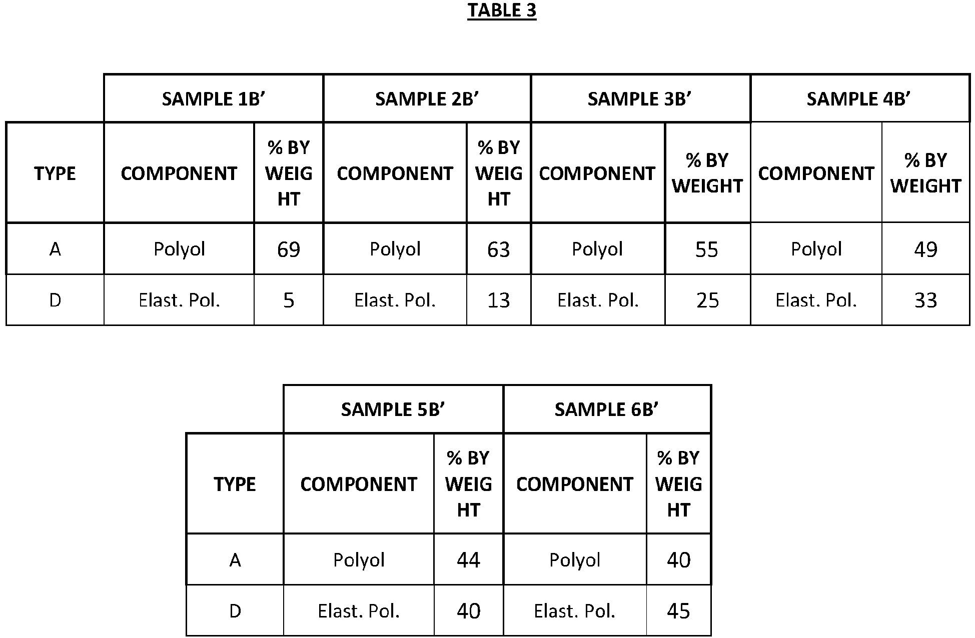

### Example 2 - comparison of the mechanical characteristics between the samples of polyurethane polymer without and with a post-consumer elastomeric and / or thermoplastic polymer (D)

The samples described in paragraphs 1.1 and 1.2 of example 1 - after pouring into a special mould and polymerising the mixture - were compared in terms of Sh A hardness according to the ASTM D 2240 standard.

The results are reported in table 4:

**TABLE 4**

| **SAMPLE** | **HARDNESS (Sh A)** |
|---|---|
| 1A | 65 |
| 2A | 65 |
| 3A | 65 |
| 1B | 65 |
| 2B | 65 |
| 3B | 65 |
| 4B | 65 |
| 5B | 53 |
| 6B | 52 |

Therefore, the samples obtained by adding a post-consumer elastomeric and / or thermoplastic polymer (D) in a percentage between 3% and 33% (samples 1B, 2B, 3B, 4B) and the samples obtained without the latter (samples 1A, 2A, 3A) have a mechanically similar behaviour. Furthermore, it is clear that these samples passed the proposed tests with a resulting excellent mechanical performance.

On the other hand, it should be observed that the samples obtained by adding a post-consumer elastomeric and / or thermoplastic polymer (D) in a percentage equal to or higher than 40% (samples 5B and 6B) have hardness values envisaged in the present invention although different from the reference samples (samples 1A, 2A, 3A).

### Example 3 - viscosity of the mixtures of samples of the intermediate mixture containing polyol (A) alone and a post-consumer elastomeric and / or thermoplastic polymer (D)

The viscosity of the samples described in paragraph 1.3 of example 1, was measured according to the ASTM D 445 standard.

The results are reported in table 5:

**TABLE 5**

| **SAMPLE** | **VISCOSITY (cP)** |
|---|---|
| 1B' | 850 |
| 2B' | 1180 |
| 3B' | 2340 |
| 4B' | 4560 |
| 5B' | 6350 |
| 6B' | 10800 |

According to the experiment conducted, the maximum viscosity level allowed to enable to pour and level the mixture was set at about 6500 cP, given that the presence of values higher than 40% of elastomeric and / or thermoplastic polymer (D) excessively stressed the mixer, blocking it. Therefore, it is clear that the sample 6B' does not fall within the accepted range of values due to a limit at the process level.

## Claims

1. The use of a polyurethane polymer for manufacturing at least one layer of a shaped polyurethane matrix **(1)** which can be fixed to a building panel to obtain a wall or a part thereof with at least one decorative element in relief, the polyurethane polymer consisting of:
(A) from 40% by weight to 85% by weight of polyols;
(B) from 15% by weight to 46% by weight of isocyanate;
(C) from 0% by weight to 5% by weight of at least one additive;
(D) from 3% by weight to 40% by weight of an elastomeric polymer and/or thermoplastic;
wherein the total sum of the % by weight of said components from (A) to (D) is 100%;
wherein the % by weight of said components from (A) to (D) are calculated with respect to the total weight of the polyurethane polymer;
wherein the polyurethane polymer has a Shore A hardness measured according to the ASTM D 2240 standard comprised between 45 Sh A and 75 Sh A;
wherein the elastomeric and / or thermoplastic polymer (D) is a post-consumer material according to the UNI EN ISO 14040 and UNI EN ISO 14044 standards.

2. Use according to claim 1, wherein said elastomeric and/or thermoplastic polymer (D) is in the solid state.

3. Use according to the preceding claim, wherein said elastomeric and / or thermoplastic polymer (D) is in form of granules measuring 0. 01 mm - 25 mm in diameter, more preferably 0.1 mm - 10 mm, even more preferably 0.8 - 3 mm.

4. Use according to any one of the preceding claims, wherein said elastomeric and/or thermoplastic polymer (D) is selected from: rubber, silicone, polyurethane and the like or a mixture of two or more of them.

5. Use according to any one of the preceding claims, wherein said polyurethane polymer has a Shore A hardness measured according to the ASTM D 2240 standard comprised between 50 Sh A and 70 Sh preferably between 55 and 65 ShA.

6. Use according to any one of the preceding claims, wherein said polyurethane polymer has an elongation at break measured according to the ASTM D 3574 standard and comprised between 70% and 100% more preferably between 80% and 95%.

7. Use according to any one of the preceding claims, wherein said polyurethane polymer has a viscosity measured according to the ASTM D 445 standard comprised between 500 and 6500 cP, more preferably between 700 and 5000 cP even more preferably between 800 and 2500 cP.

8. A shaped polyurethane matrix which can be fixed to a building panel used to obtain walls with at least one decorative element in relief, which includes at least one layer made of said polyurethane polymer according to any one of claims 1 to 7, wherein the elastomeric and/or thermoplastic polymer (D) is a post-consumer material according to the UNI EN ISO 14040 and UNI EN ISO 14044 standards, the polyurethane polymer having a Shore A hardness measured according to the ASTM D 2240 standard comprised between 45 Sh A and 75 Sh A.

9. A method for manufacturing at least one layer of a matrix **(1)** according to claim 8, comprising consecutively the steps of:
- providing:
- a mould **(2)** with a bottom wall **(21)** which includes the positive cast **(23)** of the decorative element and a plurality of side walls **(20),** the latter and said bottom wall **(21)** being mutually coupled to define a compartment **(24);**
- a semi-liquid mixture to obtain a polyurethane polymer according to one or more of claims 1 to 7;
- pouring the semi-liquid mixture into said compartment **(24);**
- polymerisation of the semi-liquid mixture for a predetermined period of time so as to obtain said shaped polyurethane matrix **(1)** according to claim 8, wherein said at least one layer of the latter has a negative cast **(13)** of the decorative element.

10. A method for manufacturing at least one layer of a large shaped polyurethane matrix **(1)** with a surface area measuring between 4 m² and 500 m², which can be fixed to a building panel to obtain a wall or a part thereof with a decorative element in relief, by means of a mould **(2')** comprising:
- a plurality of side walls **(20);**
- a bottom wall **(21)** which includes the positive cast **(23)** of the decorative element; wherein said plurality of side walls **(20)** and said bottom wall **(21)** are coupled to each other to define a compartment **(24);**
- a partitioning containment wall **(22)** substantially perpendicular to said bottom wall **(21),** the partitioning containment wall **(22)** being movable longitudinally along said bottom wall **(21)** to define a plurality of consecutive closed portions **(25)** of said mould **(2');**
the method comprising consecutively the steps of:
- providing said mould **(2')** and a semi-liquid mixture to obtain a polyurethane polymer comprising:
(A) from 40% by weight to 85% by weight of polyols;
(B) from 15% by weight to 46% by weight of isocyanate;
(C) from 0% by weight to 5% by weight of at least one additive;
wherein the % by weight of said components from (A) to (C) are calculated with respect to the total weight of the polyurethane polymer;
- pouring the semi-liquid mixture in a determined portion **(25)** of the mould **(2');**
- polymerisation of the semi-liquid mixture for a predetermined period of time;
- longitudinal movement of said partitioning containment wall **(22)** along said bottom wall **(21);**
wherein said pouring, polymerisation, longitudinal movement steps are carried out iteratively until said partitioning containment wall **(22)** mutually impacts one of said side walls **(20)** so as to obtain said at least one layer of said large shaped polyurethane matrix **(1)** in said polyurethane polymer having the negative cast **(13)** of the decorative element.

11. Method according to the preceding claim, wherein said polymerisation step is carried out for a predetermined period of time of 15 - 4000 seconds, more preferably 40 - 3600 seconds, preferably subsequently to said pouring step and previously to said polymerisation step there occurring a step for levelling the poured mixture in the determined portion **(25),** preferably said step for preparing the mixture being carried out by manually mixing or by automatically mixing with agitators, mixers, a foaming machine or the like.

12. Method according to any one of claims 10 or 11, wherein the polyurethane polymer consists of:
(A) from 40% by weight to 85% by weight of polyol;
(B) from 15% by weight to 46% by weight of isocyanate;
(C) from 0% by weight to 5% by weight of at least one additive;
(D) from 3% by weight to 40% by weight of an elastomeric and / or thermoplastic polymer;
wherein the total sum of components from (A) to (D) is 100%, said step for preparing the mixture including a step for combining the polyol (A) and the isocyanate (B) and a subsequent step for adding the elastomeric and / or thermoplastic polymer (D),
wherein said elastomeric and / or thermoplastic polymer (D) is a post-consumer material according to the UNI EN ISO 14040 and UNI EN ISO 14044 standards.

13. Method according to the preceding claim, wherein said elastomeric and / or thermoplastic polymer (D) is in solid state. Said elastomeric and / or thermoplastic polymer (D) preferably being in form of granules measuring 0. 01 mm - 25 mm in diameter, more preferably 0.1 mm - 10 mm, even more preferably 0.8 - 3 mm.

14. A large shaped polyurethane matrix with a surface area measuring between 4 m² and 500 m², more preferably between 100 m² and 300 m², which can be fixed to a building panel used to obtain walls with decorative elements, at least one layer of said matrix being obtained with the method according to claims 10 to the preceding, and preferably comprising a negative cast **(13),** of the decorative element.

15. A mould for providing at least one layer of a polyurethane matrix according to the preceding claim, comprising:
- a plurality of side walls **(20);**
- a bottom wall **(21)** which includes the positive cast **(23)** of the decorative element;
wherein said plurality of side walls **(20)** and said bottom wall **(21)** are coupled to each other to define a compartment **(24);**
- a partitioning containment wall **(22)** substantially perpendicular to said bottom wall **(21),** the partitioning containment wall **(22)** being movable longitudinally along said bottom wall **(21)** to define a plurality of consecutive closed portions **25)** of said mould **(2')** and preferably comprising at least one counter-shaped opening with respect to the cross-section of said positive cast **(23)** to ensure the sliding of the partitioning containment wall **(22)** along said bottom wall **(21).**
